(19) Europäisches Patentamt

European Patent Office

Office européen des brevets

(11) Publication number : **0 387 966 B1**

## (12) EUROPEAN PATENT SPECIFICATION

(45) Date of publication of patent specification :
**11.11.92 Bulletin 92/46**

(51) Int. Cl.⁵ : **F16L 3/123**

(21) Application number : **90200601.4**

(22) Date of filing : **13.03.90**

(54) **Pipe-clip.**

(30) Priority : **14.03.89 NL 8900620**

(43) Date of publication of application :
**19.09.90 Bulletin 90/38**

(45) Publication of the grant of the patent :
**11.11.92 Bulletin 92/46**

(84) Designated Contracting States :
**AT BE CH DE FR GB IT LI NL**

(56) References cited :
**DE-A- 3 439 418**
**GB-A- 718 527**
**US-A- 2 338 145**

(73) Proprietor : **J. van Walraven B.V.**
**Industrieweg 5**
**NL-3641 RK Mijdrecht (NL)**

(72) Inventor : **van Walraven, Jan**
**Prins Bernhardlaan 6**
**NL-3641 GP Mijdrecht (NL)**

(74) Representative : **Boelsma, Gerben Harm, Ir. et al**
**Octrooibureau Polak & Charlouis Laan Copes van Cattenburch 80**
**NL-2585 GD Den Haag (NL)**

EP 0 387 966 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a pipe-clip, comprising an annular clip body formed of a strip material, the ends of which are bent into flanges adapted to be pulled together by means of a clamping screw, a lining of elastomer material being provided on the inner side of the clip body, said lining being provided with shock-absorbing protections or ribs on one side and being smooth on the other side.

Such a pipe-clip is known e.g. from DE 34 39 418. With this well-known pipe-clip the ribs or projections are provided on the inner circumferential side of the lining, i.e. on the side turned away from the annular clip body (the latter being usually formed of metal). When applying the clip around an article, such as a pipe, to be suspended by means of the clip, the projecting ribs will engage the outer surface of the article (pipe). Due to the projecting ribs a shock-absorbing suspension of the article (pipe) may be obtained.

In addition to being used for the suspension of metal pipes, such pipe clips are increasingly used for fastening plastic water pipes onto walls.

A disadvantage found in practice is to be seen in that after some time certain types of lining tend to become adhesively connected with the plastic conduit. Due to this the plastic pipe will be no longer permitted to slide within the surrounding clip on locations, where this would be desirable. It is assumed that this undesired phenomenon is caused by migration of the plasticizer(s) within the elastomer material of the lining. The invention aims at reducing this tendency of the lining and the pipe to become adhesively connected, in such a way, that a sliding movement of the pipe at locations, where necessary, will remain possible while maintaining the shock absorbing effect of the lining.

According to the invention this aim is achieved in that the shock absorbing projections or ribs are provided on the outer circumference of the lining so that they bear with their free ends onto the inner side of the annular clip body. This means, that the smooth side of the lining will get into contact with the pipe, due to which the surface pressure between lining and pipe will be a fraction only of that with the well-known construction.

It will remain possible with the pipe-clip according to this invention to clamp a pipe on a certain preferred location - from where sliding movements are permitted to take place in opposite directions-in place by tightening the clamping screw to such an extent, that the two flanges are engaging one another. At other locations a suspension permitting sliding movements may be obtained by means of the same size of pipe-clip when a filling member of a certain thickness is applied between the two flanges.

It is to be noted that GB-A-718.527 discloses a pipe-clip of the type in which an annular clip body is provided with a rubber lining, which has a rib on its back or outer side engaging the inner side of the clip body.

With this well-known construction, however, the projecting rib is engaging into a corresponding slot in the annular clip body and consequently has a fastening function rather than a shock-absorbing function.

The invention will be hereinafter further explained by way of example, with reference to the accompanying drawing.

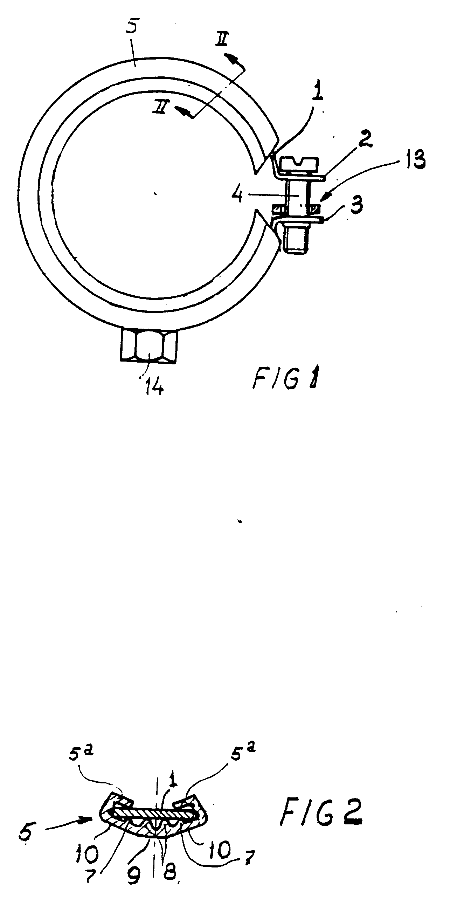

Fig. 1 is an elevation of the pipe-clip according to the invention and

fig. 2 is a cross-section along the line 2-2 in fig. 1.

The pipe-clip shown in the drawing consists of a strip of metal which is formed into an annular clip body 1, the ends of which are formed into flanges 2 and 3, which may be pulled together by means of a clamping screw 4, so as to clamp the clip body around an article, such as a plastic pipe.

The annular clip body 1 is provided with a lining 5 formed of an elastomer material, e.g. a suitable type of synthetic rubber. The lining is provided, in a manner known per se, with bent edges 5a facing one towards the other and adapted to engage the lateral edges of the annular clip body 1. The lining 5 has on its outer surface, i.e. on the side facing towards the annular clip body 1, projecting circumferential ribs 7 and 8. The ribs 7 located adjacent the lateral edges of the lining have a smaller height than the ribs 8 located in the central area. Due to this the lining has an inner circumferential surface which is composed of a smooth, cylindrically shaped middle section 9 and two conically widening lateral portions 10 connected to each of the ends of the section 9. Such a lining permits a pipe to be clamped in place by tightening the fastening screw to such an extent, that the two flanges 2 and 3 will engage each other, while the inner circumferential surface of the lining will substantially adapt a cylindrical shape. By turning the fastening screw less tightly the lateral portions 10 will keep the conically widening shape so that a sliding movement of the pipe within the shorter middle section 10 will remain possible. In order to prevent the fastening screw 4 from being tightened too heavy at those locations, where a sliding movement must remain possible, a filling ring 13 may be applied between the two flanges 2 and 3.

A nut 14 is welded to the clip body 1 in the usual manner so as to attach the clip to a wall. The lining is provided with a corresponding recess.

## Claims

1. A pipe-clip, comprising an annular clip body (1) formed of a strip material, the ends of which are bent into flanges (2, 3) adapted to be pulled together by means of a clamping screw, a lining (5) of elastomer material being provided on the inner side of the clip body (1), said lining (5) being provided with shock-absorbing protections or ribs (7, 8) on one side and being smooth on the other side, characterized in that the projections or ribs (7, 8) are provided on the outer circumference of the lining (5) i.e on the side facing towards the annular clip body (1), so that they bear with their free ends onto the inner side of the annular clip body (1).

2. A pipe-clip according to claim 1, characterized in that the lining is provided with circumferential ribs (7, 8), located adjacent the side edges and in the central area, the ribs (7) located adjacent the lateral edges having a smaller height than the ribs (8) located in the central area, so that the lining has an inner circumferential surface, which is composed of a smooth, cylindrically shaped middle portion (9) and two conically widening side portions (10) connected thereto on each side.

**Patentansprüche**

1. Rohrschelle, bestehend aus einem zu einem ringförmigen Haltekörper (1) geformten Materialstreifen, dessen Enden (2, 3) zu Flanschen umgebogen sind, welche mittels einer Klemmschraube zusammenziehbar sind, wobei eine Einlage (5) aus Elastomer-Werkstoff an der Innenseite des Haltekörpers (1) vorgesehen ist, welche Einlage (5) an einer Seite mit Stoss-dämpfenden Vorsprüngen oder Rippen (7, 8) versehen ist und der anderen Seite glatt ist, dadurch gekennzeichnet, dass die Vorsprünge oder Rippen (7, 8) an der Aussenseite der Einlage (5), d.h. an der dem ringförmigen Haltekörper zugewandten Seite, vorgesehen sind, so dass sie sich mit ihren freien Enden an der inneren Seite des ringförmigen Haltekörpers abstützen.

2. Rohrschelle nach Anspruch 1, dadurch gekennzeichnet, dass die Einlage mit nahe an den Seitenrändern und im Mittelbereich befindlichen Umfangsrippen (7, 8) versehen ist, wobei die nahe an den Seitenrändern liegenden Rippen (7) eine kleinere Höhe als die im Mittelbereich liegenden Rippen (8) aufweisen, sodass die Einlage eine Innenumfangsfläche hat, dass sich aus einem glatten, zylindrischen Mittelabschnitt (9) und zwei je einem Ende dasselben verbundenen, sich konisch erweiternden Seitenabschnitten (10) zusammensetzt.

**Revendications**

1. Collier pour tuyaux comprenant un corps annulaire de collier (1) fait d'une matière en bande dont les extrémités sont repliées pour former des ailes (2,3) adaptées pour être tirées l'une vers l'autre au moyen d'une vis de serrage, un revêtement (5) en matière élastomère étant prévu sur la face interne du corps du collier (1), ce revêtement (5) comportant sur une face des saillies ou nervures (7,8), d'absorption des chocs et étant lisse sur son autre face, caractérisé en ce que les saillies, ou nervures (7,8), sont prévues sur la circonférence externe du revêtement (5), c'est à dire sur la face dirigée vers le corps annulaire du collier (1), afin de prendre appui par leur extrémité libre sur la face interne du corps annulaire du collier (1).

2. Collier suivant la revendication 1, caractérisé en ce que le revêtement comporte des nervures circonférentielles (7,8) adjacentes aux bords latéraux et dans sa région médiane, les nervures (7) adjacentes aux bords latéraux ayant une hauteur plus petite que les nervures (8) situées dans la région médiane, de sorte que le revêtement a une surface circonférentielle interne qui est composée d'une partie médiane lisse (9) de forme cylindrique, et de deux parties latérales (10) élargies de façon conique et reliées chacune à un côté de ladite partie médiane.

FIG 1

FIG 2